# EUROPÄISCHE PATENTSCHRIFT

(11) **EP 2 117 290 B1**
(45) Veröffentlichungstag und Bekanntmachung des Hinweises auf die Patenterteilung: **08.04.2015**
(21) Anmeldenummer: 08707012.4
(22) Anmeldetag: 11.01.2008
(51) Int. Cl.: A01C 7/04

(54) **PNEUMATISCHE EINZELKORNSÄMASCHINE**
PNEUMATIC SINGLE-GRAIN SEEDER
SEMOIR MONOGRAINE PNEUMATIQUE

(30) Priorität: 14.02.2007 DE 102007007868
(43) Veröffentlichungstag der Anmeldung: 18.11.2009
(73) Patentinhaber: Amazonen-Werke H. Dreyer GmbH & Co. KG, 49205 Hasbergen (DE)
(72) Erfinder: GÖTZEN, Nils, 40489 Düsseldorf (DE); JOHANNABER, Stefan Jan, 49536 Lienen (DE); WIEBUSCH, Thorsten, 49205 Hasbergen (DE)
(86) Internationale Anmeldenummer: PCT/EP2008/000205
(87) Internationale Veröffentlichungsnummer: WO 2008/098652

(56) Entgegenhaltungen:
- EP-A- 1 752 029
- DE-A1- 2 353 597
- FR-A- 2 641 441
- US-B1- 6 564 729

## Beschreibung

Die Erfindung betrifft eine pneumatische Einzelkornsämaschine gemäß des Oberbegriffes des Patentanspruches 1.

Eine derartige Einzelkornsämaschine ist beispielsweise durch die FR 2641441 oder die DE 101 40 341 B4 bekannt. Diese Einzelkornsämaschine weist ein als Trommel ausgebildetes Vereinzelungsorgan auf, in welchem in Perforationsreihen zueinander beabstandete Perforationen angebracht sind. Diese Perforationen werden mit einem Druckunterschied über eine Druckquelle beaufschlagt. Wenn die Perforationen durch einen Saatgutvorrat geführt werden, lagern sich an den Perforationen Samenkörner an. Die Perforationen weisen über ihre gesamte Längenausdehnung eine gleiche und gleichgroße Querschnittsform auf.

Das Ablösen der an den Perforationen angelagerten Samenkörner geschieht durch Unterbrechung des Druckunterschiedes. Der Ablösezeitpunkt ist jedoch relativ unterschiedlich, so dass die Samenkörner nicht in einem ausreichend gleichmäßigen Abstand zueinander die Vereinzelungstrommel an dem Ablöseort erlassen. Dies führt zu einer unbefriedigenden gleichmäßigen Ablage des Saatgutes im Boden.

Der Erfindung liegt die Aufgabe zugrunde, eine gleichmäßigere Ablösung der Samenkörner bei gleichzeitiger Gewährleistung der Verstopfungsunanfälligkeit der Perforation zu erreichen.

Diese Aufgabe wird erfindungsgemäß durch die kennzeichnenden Merkmale des Patentanspruches 1 gelöst. Infolge dieser Maßnahmen wird einerseits eine Verschlusszeitoptimierung bei der Unterbrechung der an der Perforation anliegenden Druckdifferenz durch die Abdeckeinrichtung erreicht, dass sich durch die konturengleiche Ausgestaltung der Abdeckseite der Abdeckeinrichtung und der Seite der Perforationsöffnung quasi ein schlagartiger Verschluss der Perforation und die Unterbrechung der Druckdifferenz ergibt, so dass ein wesentlich verbesserter definierter Abwurf der vereinzelten Samenkörner von dem Vereinzelungsorgan in Abgaberichtung erreicht wird. Des weiteren wird sicher gestellt, dass in die Perforationen gelangene Samenkörner oder Teile davon sich nicht innerhalb der Perforationen festsetzen können, weil der Querschnitt sich in seiner Ausdehnung nicht verkleinert, sondern vorteilhaft vergrößert, so dass diese in die Perforationen gelangene Samenkörner oder Teile davon durch die Perforationen fallen können.

Vorteilhaft ist für das Nichtverstopfen der Perforationen, dass der Querschnitt der Perforation sich von der Vereinzelungsseite zu der der Vereinzelungsseite abgewandten Seite sich erweitert.

Eine einfache Verwirklichung der erfindungsgemäßen Ausgestaltung der Perforationen lässt sich dadurch erreichen, dass in dem Vereinzelungsorgan Durchbrüche angeordnet sind, dass in den Durchbrüchen Einsatzelemente eingesetzt sind, dass in den Einsatzelementen die Perforation mit dem sich nicht verkleinerten Querschnitt der Perforationskontur enthalten ist.

Eine einfache Anordnung der einzelnen Perforationen in dem Vereinzelungsorgan lässt sich dadurch erreichen, dass die Einsatzelemente mittels Verbindungselementen zu einer als ein in das Vereinzelungsorgan im Bereich der Durchbrüche umlaufender Ring miteinander verbunden und in die Durchbrüche einsetzbar sind.

Hierdurch werden die einzelnen Elemente der Perforationen einer Perforationsreihe zu einem Ring zusammengefasst, so dass für eine Perforationsreihe alle Perforationen in einfacher Weise in dem Vereinzelungsorgan anzuordnen sind. Der Ring mit den einzelnen Perforierungen lässt sich beispielsweise aus Kunststoff in einem Kunststoffspritzvorgang in einfacher Weise herstellen.

Eine einfache kompakte Ausgestaltung der Einsatzelemente mit relativ wenig Materialeinsatz lässt sich dadurch verwirklichen, dass die Einsatzelemente im Bereich der Perforation eine Wandstärke von zumindest 2mm aufweisen.

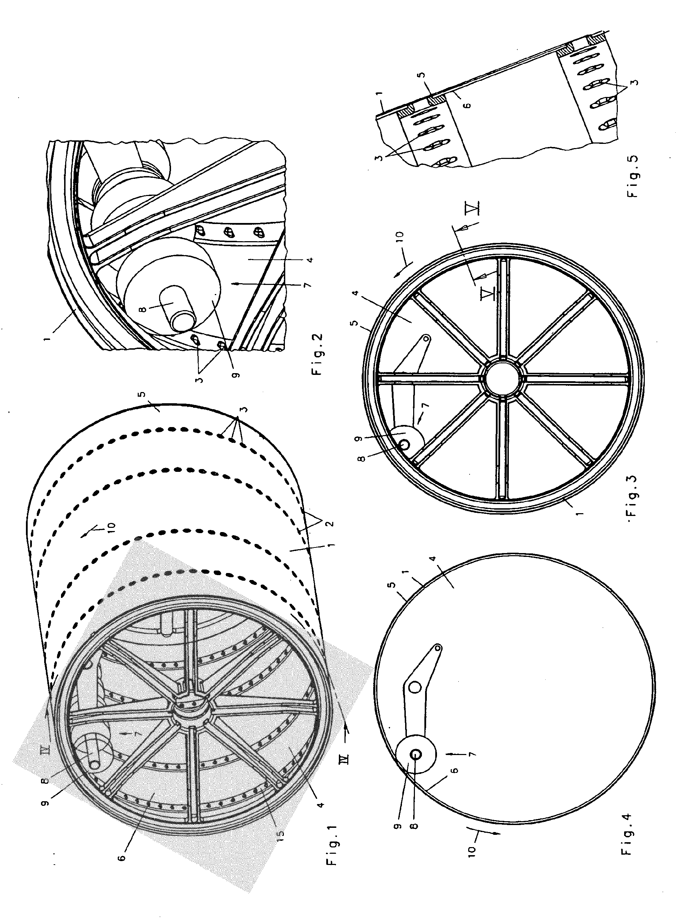

Weitere Einzelheiten der Erfindung sind der Beispielsbeschreibung und den Zeichnungen zu entnehmen. Hierbei zeigen
- Fig. 1: die Vereinzelungstrommel der Einzelkornsämaschine in perspektivischer Darstellung,
- Fig. 2: eine Teilansicht der Vereinzelungstrommel gemäß Fig. 1 in vergrößerter und perspektivischer Darstellung,
- Fig. 3: die Seitenansicht der Vereinzelungstrommel,
- Fig. 4: die Vereinzelungstrommel im Schnitt IV-IV,
- Fig. 5: die Vereinzelungstrommel ausschnittsweise im Schnitt V-V und vergrößertem Maßstab,

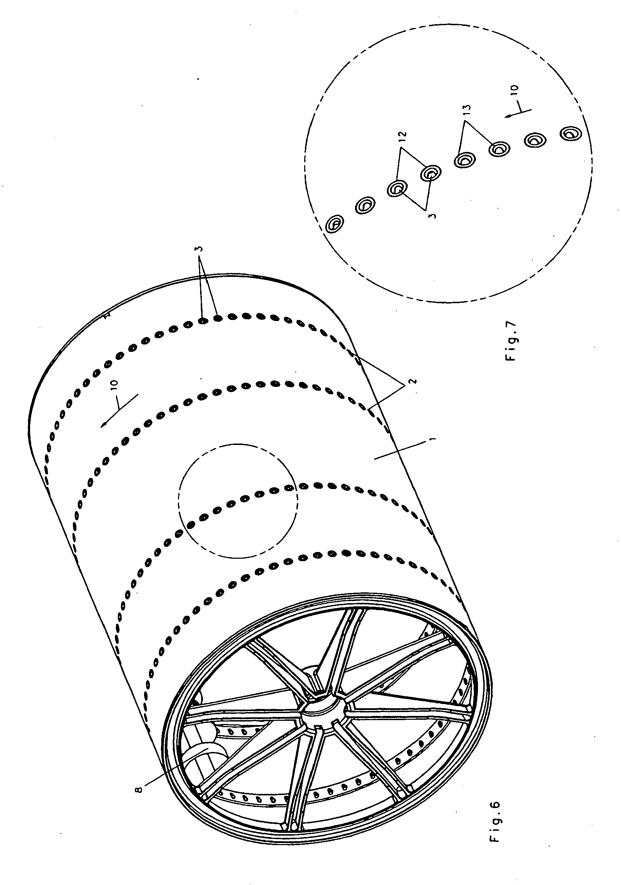

- Fig. 6: die Vereinzelungstrommel gemäß Fig.1 in perspektivischer Darstellung und vergrößertem Maßstab,
- Fig. 7: die Ausgestaltung und Anordnung der Perforation einer Perforationsreihe entsprechend Fig. 6 in vergrößertem Maßstab,

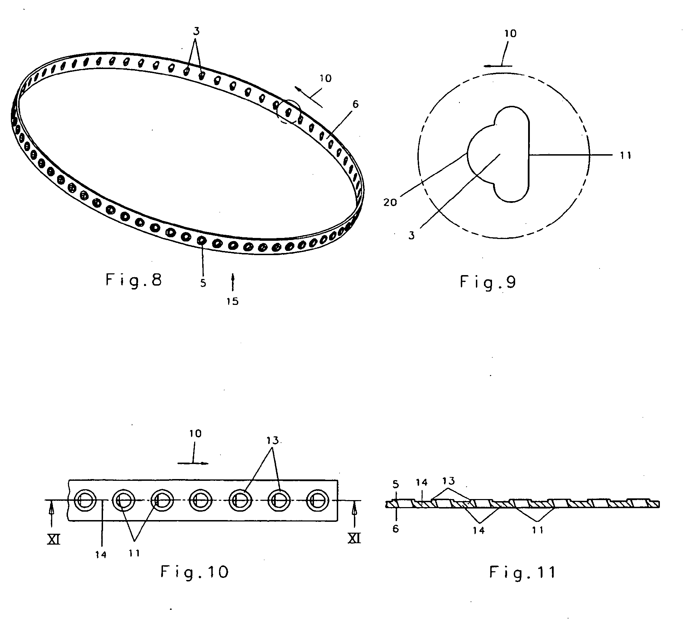

- Fig. 8: einen Ring, in dem die Perforationen einer Perforationsreihe angeordnet sind, zum Einsetzen in die Vereinzelungstrommel,
- Fig. 9: die Kontur der Perforation auf der der Vereinzelungsseite abgewandten Seite im vergrößertem Maßstab,
- Fig. 10: einen Teil des Ringes in dem die Perforationen einer Perforationsreihe angeordnet sind, in gestreckter Darstellung,
- Fig. 11: der Perforationsring in Schnitt XI-XI,
- Fig. 12: die vereinfachte Darstellung eines Teiles des Perforationsringes mit Perforationen in perspektivischer Darstellung,
- Fig. 13: die Darstellung einer Perforation des Perforationsringes gemäß Fig. 12 in vergrößertem Maßstab und
- Fig. 14: eine Prinzipdarstellung verschiedener Querschnitte einer Perforation.

Die Vereinzelungstrommel 1 ist in nicht dargestellter Weise drehbar in einem Gehäuse unterhalb eines Saatgutvorrates einer Einzelkornsämaschine angeordnet und wird von einer Kraftquelle angetrieben. Das Gehäuse bzw. der Saatgutvorratsbehälter weisen zwei voneinander beabstandete Seitenwände auf, die sich parallel zur Bewegungsrichtung der Trommel 1 und somit zumindest annähernd mit der Trommel 1 zusammenwirken. Die Vereinzelungstrommel 1 wird in bekannter Weise mittels eines Antriebes rotierend angetrieben. In der Vereinzelungstrommel 1 sind mehrere Perforationsreihen 2 mit beabstandet zueinander angeordneten Perforationen 3 angeordnet.

Die Perforationen 3 werden mit einer Druckdifferenz beaufschlagt, welche von einem Gebläse, welches nicht dargestellt ist, erzeugt wird. Mittels dieses Gebläses ist für die Perforationen 3 eine Druckdifferenz zwischen dem Innenraum 4 der Vereinzelungstrommel 1 und dem Außenbereich der Vereinzelungstrommel 1 zu erzeugen. Diese Druckdifferenz ist derart, so dass, wenn die Trommel 1 mit ihrer Außenseite 5 durch einen Saatgutvorrat geführt wird, sich an den Perforationen 3 auf der Außenseite 5 der Vereinzelungstrommel 1 Samenkörner anlagern. Den Perforationen 3 einer Perforationsreihe 2 ist eine von der Vereinzelungstrommel 1 zu einer Ablageeinrichtung, die beispielsweise als Säschar ausgebildet ist, führende Ausbringleitung in nicht dargestellter Weise zugeordnet.

Im Innenraum 4 der Vereinzelungstrommel 1 ist auf der der Vereinzelungsseite 5 des Vereinzelungsorgans 1 und der Perforationen 3 abgewandte Seite 6 des Vereinzelungsorgans 1 bzw. der Perforation 3, die an den Perforationen 3 anliegende Druckdifferenz zum Ablösen der Saatkörner unterbrechende Abdeckvorrichtung 7 in Form von auf einer Welle 8 angeordneten scheibenartigen Rollen 9 angeordnet. Die Abdeckeinrichtung 6 ist im Bereich der Übergabe des Saatgutes von dem Vereinzelungsorgan 1 in die nicht dargestellte Ausbringleitung angeordnet.

Die Querschnittsform der Perforation 3 ist auf der Vereinzelungsseite 5 des Vereinzelungsorgans 1 unterschiedlich zu der der Vereinzelungsseite 5 abgewandte Seite 6 der Vereinzelungstrommel 1. Die der Drehrichtung der Trommel 1 nachlaufende Seite 11 der Perforationsöffnung 3 verläuft auf der der Vereinzelungsseite 5 abgewandten Seite 6 parallel und/oder konturengleich zu der Abdeckseite der als Rolle 9 ausgebildeten Abdeckeinrichtung 7. Die Kontur der Perforationsöffnung 3 verkleinert sich im Verlauf von der Vereinzelungsseite 5 zu der der Vereinzelungsseite 5 abgewandten Seite 6 nicht. Der Querschnitt der Perforation 3 erweitert sich in vorteilhafter Weise von der Vereinzelungsseite 5 zu der der Vereinzelungsseite 5 abgewandten Seite 6. In dem Vereinzelungsorgan, die als Vereinzelungstrommel 1 ausgebildet ist, sind Durchbrüche 12 angeordnet. In diese Durchbrüche 12 werden Einsatzelemente 13 eingesetzt. Die Einsatzelemente 13 sind mittels Verbindungselementen 14 zu einem als umlaufender in das Vereinzelungsorgan 1 im Bereich der Durchbrüche 12 einsetzbaren Ring 15 ausgebildet, wie die Zeichnungen zeigen. Die Einsatzelemente 13 weisen im Bereich der Perforation 3 eine Wandstärke von zumindest 2 mm auf. In den Einsatzelementen 13 sind die Perforationen 3 mit dem sich nicht verkleinernden Querschnitt der Perforationskontur enthalten.

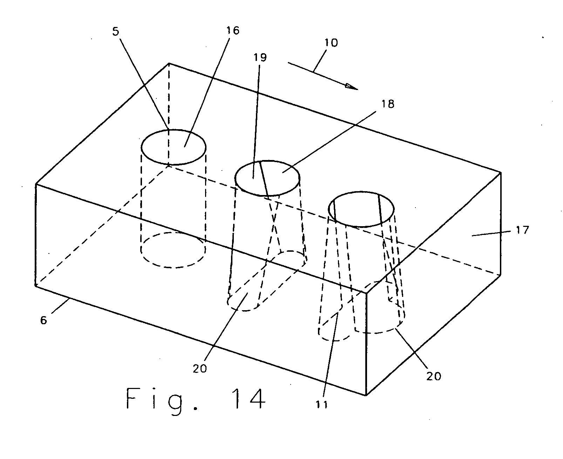

Im nachfolgenden soll die Ausgestaltung der sich nicht verkleinernden Kontur der Perforation 3 über ihre Länge im Vergleich zu anderen Querschnitten, auch im Hinblick auf die Verschlusszeitoptimierung zur Druckdifferenzunterbrechung anhand der Fig. 14 erläutert werden:
Die Perforationen 16 in dem das Vereinzelungsorgan simulierenden Klotz weist sowohl auf der Vereinzelungsseite wie auf der Vereinzelungsseite 5 abgewandten Seite 6 jeweils den gleichen Querschnitt auf. Der Querschnitt der Perforation 16 ist durchgängig gleichbleibend ausgebildet. Aufgrund des gleichbleibenden Querschnittes der Perforation 16 können auf der der Vereinzelungsseite 5 der Öffnung in die Perforation 16 eintretende Samenkörner oder Teile davon hindurch fallen, weil sich die Querschnittserstreckung über die gesamte Breite nicht ändert.

Die Perforation 18 weist auf der Vereinzelungsseite 5 einen kreisrunden Querschnitt 19 auf, der sich zu der Vereinzelungsseite 5 abgewandten Seite 6 zu einem langgestreckten Querschnitt 20 verändert, wobei jedoch die Größe des Querschnitts 20 etwa gleich dem Querschnitt 19 bleibt. Im Gegensatz zu dem Querschnitt der Öffnung 16 ist der Querschnitt 20 der Öffnung 18 auf der Vereinzelungsseite 5 abgewandten Seite 6 so ausgebildet, dass sie einen relativ schnellen endgültiger Verschluss der Querschnittsöffnung 20 durch eine Abdeckeinrichtung 7 möglich ist.

Im Gegensatz zu der Perforation 16 verkleinert sich die Querschnittsausdehnung der Perforation 18 von der Vereinzelungsseite 5 zu der der Vereinzelungsseite 5 abgewandten Seite 6, so dass auf der Vereinzelungsseite 6 der Perforationen 18 in die Perforationen 18 eintretende Samenkörner oder Teile davon sich verklemmen, falls deren Erstreckung größer ist als die Querschnittserstreckung auf der der Vereinzelungsseite 5 abgewandten Seite 6 der Perforation 18.

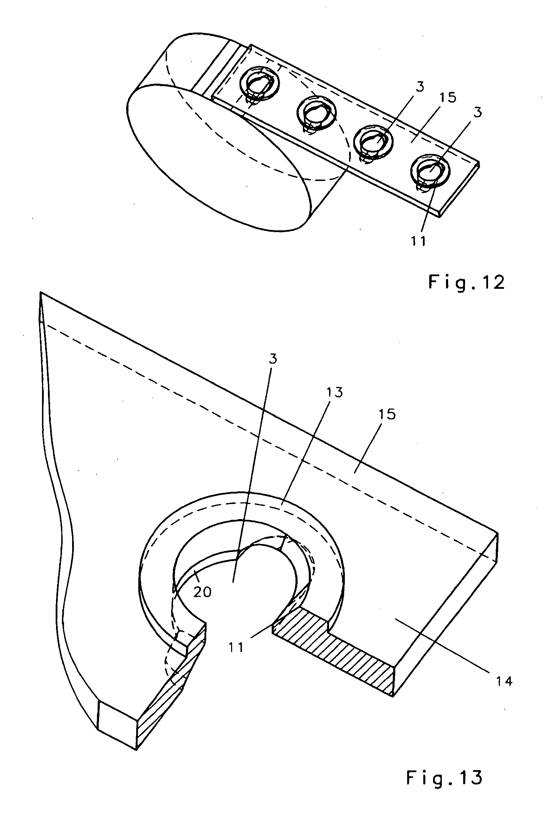

Die Perforation 3 vereint die Vorteile der beiden Perforationen 16 und 18 . Der Querschnitt der Perforation 3 verkleinert sich nicht von der Vereinzelungsseite 5 zu der der Vereinzelungsseite 5 abgewandten Seite 6. Weiterhin ist auf der der Drehrichtung 10 der Trommel 1 abgewandten Seite 11 und auf der der Vereinzelungsseite abgewandte Seite 6 der Perforationsöffnung 3 eine parallel oder konturengleich zu der Abdeckseite der als Rolle ausgebildeten Abdeckeinrichtung 7 verlaufende Kante 11 angeordnet. Der Querschnitt der Kontur der Perforation 3 auf der Vereinzelungsseite 5 verläuft unverkleinert bis zu der Vereinzelungsseite 5 abgewandten Seite 6. Hierdurch können auf der Vereinzelungsseite 5 in die Perforation 3 eintretende Samenkörner oder Teile davon sich nicht in der Perforation verklemmen, sondern sie können ungehindert hindurchfallen. Aufgrund der Ausgestaltung der Perforation 3, wie Fig. 12, 13 und 14 zeigen, erweitert sich der Querschnitt dementsprechend.

Wenn die Rolle 8 der Abdeckeinrichtung 7 zunächst auf der Seite 20 die Perforation 3 abdeckt wird die Druckdifferenz noch nicht entscheidend verändert. Wenn die Rolle 8 jedoch der Kante 11 immer näher kommt wird bei Erreichen der Kante 11 durch die Rolle 8 quasi schlagartig die Druckdifferenz an der Perforation 3 unterbrochen, so dass das an der Perforation 3 auf deren Vereinzelungsseite 5 anhaftende Samenkorn abfällt. Weil der Verschluss der Perforation 3 durch die Kante 11 ein sehr gleichmäßiger Verschluss der Perforation 3 zur Druckdifferenzunterbrechung erfolgt, wird eine sehr hohe Vereinzelungsqualität erreicht.

## Patentansprüche

1. Pneumatische Einzelkornsämaschine mit einem Saatgutvorratsbehälter und zumindest einem drehbar angeordneten Vereinzelungsorgan, wie Trommel, Riemen, Scheiben, in dessen Umfangsfläche kreisförmig angeordnete und zueinander beabstandete Perforationsreihen angebracht sind, einem Gebläse, mittels welchem eine Druckdifferenz zwischen dem Innenraum des Vereinzelungsorgans und dem Außenbereich des Vereinzelungsorgans erzeugbar ist, so dass, wenn das Vereinzelungsorgan durch den Saatgutvorrat geführt wird, sich an den Perforationen des perforierten Organs Samenkörner anlagern, wobei auf der Vereinzelungsseite des Vereinzelungsorgans abgewandten Seite des Vereinzelungsorgans, eine die an die Perforation anliegende Druckdifferenz zum Ablösen der Saatkörner unterbrechende Abdeckeinrichtung angeordnet ist, wobei die Abdeckeinrichtung im Bereich der Übergabe des Saatgutes von dem Organ in die Ausbringleitung angeordnet ist, **dadurch gekennzeichnet, dass** die Querschnittsform der Perforierung (3) auf der Vereinzelungsseite (5) des Organs (1) unterschiedlich zu der der Vereinzelungsseite (5) abgewandten Seite (6) des Organs (1) ist, dass die der Drehrichtung (10) abgewandte Seite (11) der Perforationsöffnung (3) auf der der Vereinzelungsseite (5) abgewandten Seite (6) parallel und/oder konturengleich zu der Abdeckseite der Abdeckeinrichtung (7) verläuft, und dass die Kontur der Perforationsöffnung (3) auf der der Vereinzelungsseite (5) sich im Verlauf zu der der Vereinzelungsseite (5) abgewandten Seite (6) nicht verkleinert.

2. Einzelkornsämaschine nach Anspruch 1, **dadurch gekennzeichnet, dass** der Querschnitt der Perforation (3) sich von der Vereinzelungsseite (5) zu der der Vereinzelungsseite (5) abgewandten Seite (6) erweitert.

3. Einzelkornsämaschine nach Anspruch 1, **dadurch gekennzeichnet, dass** in dem Vereinzelungsorgan (1) Durchbrüche (12) angeordnet sind, dass in den Durchbrüchen (12) Einsatzelemente (13) eingesetzt sind, dass in den Einsatzelementen die Perforation (3) mit dem sich nicht verkleinerten Querschnitt der Perforationskontur enthalten ist.

4. Einzelkornsämaschine nach Anspruch 3, **dadurch gekennzeichnet, dass** die Einsatzelemente (13) mittels Verbindungselementen (14) zu einer als ein in das Vereinzelungsorgan (1) im Bereich der Durchbrüche (12) umlaufender Ring (15) miteinander verbunden und in die Durchbrüche (12) einsetzbar sind.

5. Einzelkornsämaschine nach einem oder mehreren der vorstehenden Ansprüche, **dadurch gekennzeichnet, dass** die Einsatzelemente (13) im Bereich der Perforation (3) eine Wandstärke von zumindest 2mm aufweisen.

## Claims

1. Pneumatic single-grain seeder with a seed storage container and at least one rotatably arranged singulating member, such as a drum, belt, discs, in the circumferential surface of which rows of perforations which are arranged in a circular manner and are spaced apart from one another are provided, a fan, by means of which a pressure difference between the interior of the singulating member and the exterior region of the singulating member is producible such that, when the singulating member is guided through the seed store, grains accumulate at the perforations of the perforated member, wherein a covering device interrupting a pressure difference, which is being applied to the perforation, in order to detach the grains is arranged on that side of the singulating member which faces away from the singulating side of the singulating member, wherein the covering device is arranged in the region of the transfer of the seeds from the member into the dispensing line, **characterized in that** the cross-sectional shape of the perforation (3) on the singulating side (5) of the member (1) is different to that side (6) of the member (1) which faces away from the singulating side (5), **in that** that side (11) of the perforation opening (3) which faces away from the direction of rotation (10) extends, on the side (6) facing away from the singulating side (5), parallel and/or with the same contour to the covering side of the covering device (7), and **in that** the contour of the perforation opening (3) is not decreased in the course from the singulating side (5) to the side (6) facing away from the singulating side (5).

2. Single-grain seeder according to Claim 1, **characterized in that** the cross section of the perforation (3) expands from the singulating side (5) to the side (6) facing away from the singulating side (5).

3. Single-grain seeder according to Claim 1, **characterized in that** apertures (12) are arranged in the singulating member (1), **in that** insert elements (13) are inserted in the apertures (12), and **in that** the perforation (3) with the non-decreased cross section of the perforation contour is contained in the insert elements.

4. Single-grain seeder according to Claim 3, **characterized in that** the insert elements (13) are connected to one another by means of connecting elements (14) to form an encircling ring (15) which is insertable into the singulating member (1) in the region of the apertures (12) and are insertable into the apertures (12).

5. Single-grain seeder according to one or more of the preceding claims, **characterized in that** the insert elements (13) have a wall thickness of at least 2 mm in the region of the perforation (3).

## Revendications

1. Semoir monograine pneumatique avec un réservoir de stockage de semences et au moins un organe de séparation disposé de façon rotative, comme des tambours, des courroies, des disques, dont la surface périphérique est munie de lignes de perforations disposées en cercle et espacées l'une de l'autre, avec une soufflante, au moyen de laquelle on peut produire une différence de pression entre la chambre intérieure de l'organe de séparation et la région extérieure de l'organe de séparation, de telle manière que, lorsque l'organe de séparation est mené à travers la réserve de semences, des graines de semence se déposent sur les perforations de l'organe perforé, dans lequel un dispositif de recouvrement interrompant la différence de pression appliquée à la perforation afin de libérer des graines de semences est disposé sur le côté de l'organe de séparation opposé au côté de séparation de l'organe de séparation, dans lequel le dispositif de recouvrement est disposé dans la région du transfert de la semence de l'organe à la conduite d'expulsion, **caractérisé en ce que** la forme de la section transversale de la perforation (3) sur le côté de séparation (5) de l'organe (1) est différente de celle du côté (6) de l'organe (1) opposé au côté de séparation (5), **en ce que** le côté (11) opposé au sens de rotation (10) de l'ouverture de perforation (3) sur le côté (6) opposé au côté de séparation (5) est parallèle et/ou de même contour que le côté de recouvrement du dispositif de recouvrement (7), et **en ce que** le contour de l'ouverture de perforation (3) ne décroît pas sur son tracé depuis le côté de séparation (5) vers le côté (6) opposé au côté de séparation (5).

2. Semoir monograine selon la revendication 1, **caractérisé en ce que** la section transversale de la perforation (3) s'élargit depuis le côté de séparation (5) jusqu'au côté (6) opposé au côté de séparation (5).

3. Semoir monograine selon la revendication 1, **caractérisé en ce que** des passages (12) sont disposés dans l'organe de séparation (1), **en ce que** des éléments d'insert (13) sont insérés dans les passages (12), **en ce que** la perforation (3) avec la section transversale non décroissante du contour de perforation est contenue dans les éléments d'insert.

4. Semoir monograine selon la revendication 3, **caractérisé en ce que** les éléments d'insert (13) sont reliés l'un à l'autre au moyen d'éléments de liaison (14) en un anneau (15) entourant qui peut être inséré dans l'organe de séparation (1) dans la région des passages (12) et peuvent être insérés dans les passages (12).

5. Semoir monograine selon une ou plusieurs des revendications précédentes, **caractérisé en ce que** les éléments d'insert (13) présentent une épaisseur de paroi d'au moins 2 mm dans la région de la perforation (3).
